# EUROPEAN PATENT SPECIFICATION

(11) **EP 1 040 260 B1**
(45) Date of publication and mention of the grant of the patent: **23.07.2003**
(21) Application number: 98964182.4
(22) Date of filing: 21.12.1998
(51) Int. Cl.: F02C 6/14, H02J 3/32, H02J 7/32

(54) **CONSTANT TURBINE INLET TEMPERATURE CONTROL OF A MICROTURBINE POWER GENERATING SYSTEM**
REGELUNGSVORRICHTUNG FÜR MIKROTURBINE MIT KONSTANTER TURBINENEINLASSTEMPERATUR
CONTROLEUR POUR MAINTENIR LA TEMPERATURE ENTREE TURBINE CONSTANTE D'UN SYSTEME DE GENERATION D'ENERGIE DE MICROTURBINE

(30) Priority: 20.12.1997 US 995464
(43) Date of publication of application: 04.10.2000
(73) Proprietor: AlliedSignal Inc., Morristown, New Jersey 07962-2245 (US)
(72) Inventor: O'BRIEN, Patrick, Albuquerque, NM 87122 (US); TAYLOR, Colin, Lakewood, CA 90713 (US)
(74) Representative: Haley, Stephen
(86) International application number: PCT/US98/27163
(87) International publication number: WO 99/032769

(56) References cited:
- EP-A- 0 472 294
- FR-A- 1 453 862
- US-A- 4 598 542

## Description

The present invention relates generally to microturbine power generating systems. More specifically, the present invention relates to modular, distributed power generating units.

The United States Electric Power Research Institute (EPRI) which is the uniform research facility for domestic electric utilities, predicts that up to 40% of all new generation could be provided by distributed generators by the year 2006. In many parts of the world, the lack of electric infrastructure (transmission and distribution lines) will greatly expedite the commercialization of distributed generation technologies since central plants not only cost more per kilowatt, but also must have expensive infrastructure installed to deliver the product to the consumer.

Small, multi-fuel, modular distributed microturbine generation units could help alleviate current afternoon "brownouts" and "blackouts" prevalent in many parts of the world. A simple, single moving part concept would allow for low technical skill maintenance and low overall cost would allow for wide spread purchase in those parts of the world where capital is sparse. In addition, given the United States' emphasis on electric deregulation and the world trend in this direction, consumers of electricity would have not only the right to choose the correct method of electric service but also a new cost effective choice from which to chose. US-A-4756607, which is assigned to the assignee of the present invention, discloses a microturbine power generating system suitable for cogeneration applications.

EP-A-0472294 discloses a system including a gas turbine coupled to a generator. In order to increase thermal efficiency and lower specific fuel consumption, the turbine is operated within narrow limits, at a constant load regardless of the external electrical power demand on the system. This is achieved by the use of a battery. Under low demand conditions, excess power (generated by the generator) is accumulated in the battery. Under power demands in excess of that generated by the generator, power shortfall is made up from the battery. This has the advantage that the capacity of the gas turbine is dictated by its average duty, and not by its maximum duty.

Yet to make these units commercially attractive to consumers, improvements are needed in areas such as increasing fuel-efficiency, reducing size and weight, and lowering thermal signature, noise, maintenance and cost penalties. For example, it is difficult to achieve a good fuel economy and acceptable emission rates, especially for turbines having fixed geometry inlets. Highest efficiency of the power generation unit is achieved through highpressure ratios and high turbine inlet temperatures. Such ratios and temperatures result during full loading and operation at full speed, load and idling, Fixed geometry gas turbines are typically run at reduced turbine inlet temperatures and part load, thereby reducing their fuel efficiency.

There is a need to improve fuel economy and lower emission rates for a microturbine power generating system including a turbine having a fixed inlet nozzle geometry.

Operating the turbine "within narrow limits," as in EP-A-0472294, is not the same as maintaining turbine inlet at or near maximum turbine inlet temperature, as disclosed in the present invention. In the former method, the turbine power, speed, and temperature are constant, so, when the load is changed, the accumulator must absorb or emit the difference in load for as long as the load is demanded. In the latter, the turbine power and speed are varied and only the temperature is held constant. The accumulator absorbs or emits the difference in load (between the demand and the turbine power) temporarily until the turbine power is brought to equal the demanded load. This approach has significant advantages.

According to the present invention there is provided a microturbine power generation system comprising a turbine having a fixed inlet nozzle; an energy storage device; and characterised by a controller for maintaining the turbine inlet at or near maximum turbine inlet temperature, the controller causing the energy storage device to temporarily supply a load when a load increase is demanded of the system until the turbine power is brought to equal the demanded load.

Preferably the system further comprises an electric generator driven by turbine power, wherein the energy storage device includes a battery, wherein the controller causes electric power to be supplied by the electric generator until a demand for the power is increased, whereupon the controller temporarily causes electric power to be supplied by the battery.

Preferably the controller further causes the battery to temporarily supply the entire demand for power when the demand for power is increased, whereby turbine speed is increased while the battery is suppling the load.

According to the present invention there is also provided a method of controlling a microturbine power generating system, the system including an electrical generator, a turbine having a fixed inlet nozzle geometry, and an external storage device, the method comprising: maintaining the inlet nozzle at a constant temperature; using the electrical generator to satisfy power demanded of the system until the power demanded is increased; and characterised by using the external storage device to temporarily satisfy the power demanded when the power demanded is increased until the turbine power is brought to equal the demanded load; the nozzle inlet temperature being at the constant temperature while the power demand is being satisfied by the external storage device.

### IN THE DRAWINGS

FIG. 1 is an illustration of a power generating system according to the present invention; and
FIG. 2 is an illustration of an engine core for the power generating system.

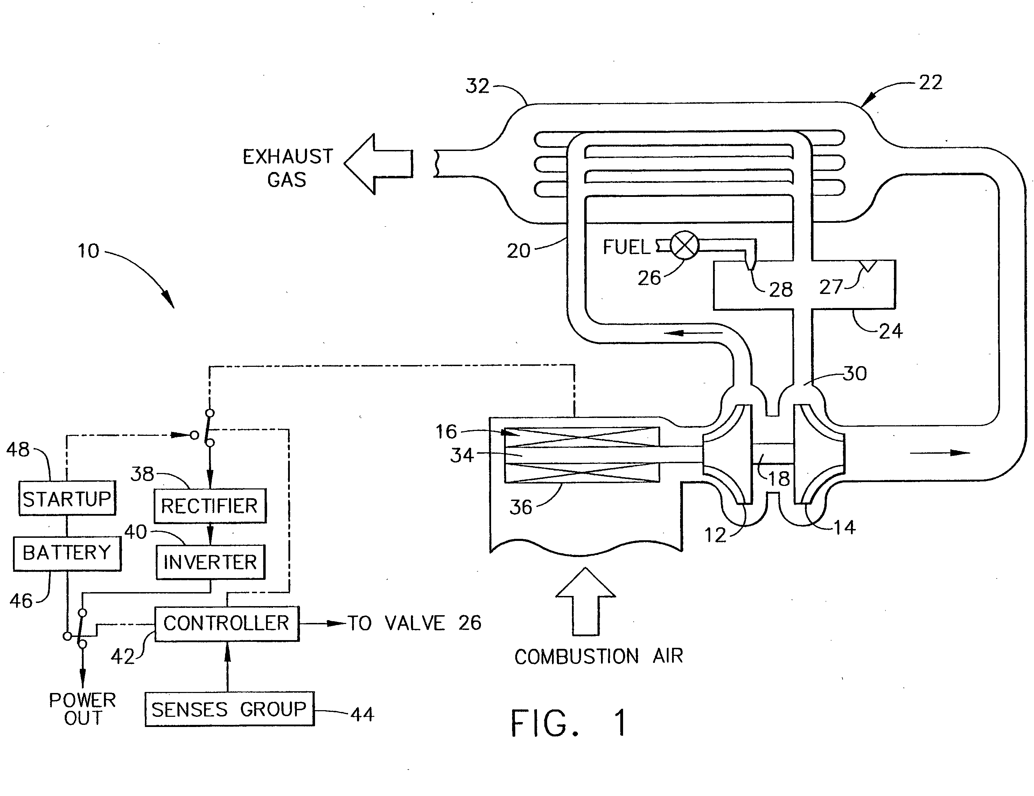

Referring to FIG. 1, a power generating system 10 according to the present invention is illustrated. The power generating system 10 includes a compressor 12, a turbine 14 and an electrical generator 16. The electrical generator 16 is cantilevered from the compressor 16. The compressor 12, the turbine 14 and the electrical generator 16 can be rotated by a single shaft 18. Although the compressor 12, turbine 14 and electrical generator 16 can be mounted to separate shafts, the use of a common shaft 18 for rotating the compressor 12, the turbine 14 and the electrical generator 16 adds to the compactness and reliability of the power generating system 10.

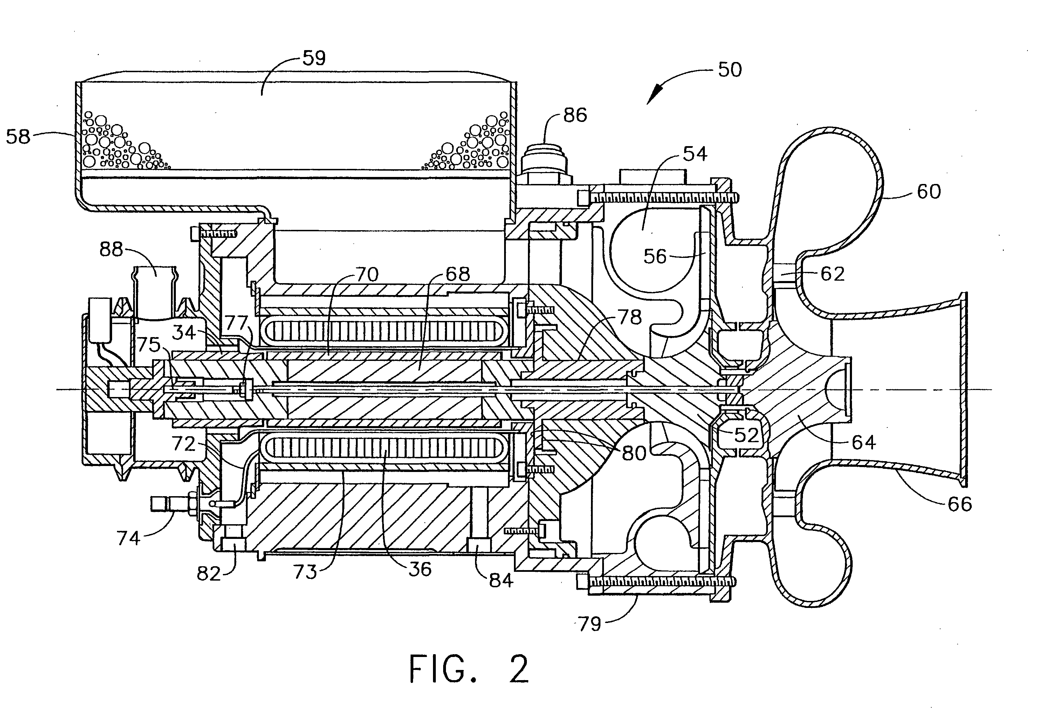

The shaft 18 can be supported by self-pressurized air bearings such as foil bearings. As is shown in Figure 2, the shaft 18 is supported by journal foil bearings 76 and 77 and a thrust foil bearing 80. The foil bearings eliminate the need for a separate bearing lubrication system and reduce the occurrence of maintenance servicing.

Air entering an inlet of the compressor 12 is compressed. Compressed air leaving an cutlet of the compressor 12 is circulated through cold side passages 20 in a cold side of a recuperator 22. In the recuperator 22, the compressed air absorbs heat, which enhances combustion. The heated, compressed air leaving die cold side of the recuperator 22 is supplied to a combustor 24.

Fuel is also supplied to the combustor 24. Both gaseous and liquid fuels can be used. Any suitable gaseous fuel can be used. Choices of fuel include diesel, flair gas, off gas, gasoline, naphtha, propane, IP-8, methane, natural gas and other man-made gases.

The flow of fuel is controlled by a flow control valve 26 The fuel is injected into the combustor 24 by an injection nozzle 28.

Inside the combustor 24 the fuel and compressed air are mixed and ignited by an igniter 27 in an exothermic reaction, in the preferred embodiment, the combustor 24 contains a suitable catalyst capable of combusting the compressed, high temperature, fuel-air mixture at the process conditions. Some known catalysis usable in the combustor 24 include platinum, palladium, as well as metal oxide catalysts with active nickel and cobalt elements.

After combustion, hot, expanding gases resulting from the combustion are directed to an inlet nozzle 30 of the turbine 14. The inlet nozzle 30 has a fixed geometry. The hot, expanding gases resulting from the combustion is expanded through the turbine 14 thereby creating turbine power. The turbine power, in turn, drives the compressor 12 and the electrical generator 16.

Turbine exhaust gas is circulated by hot side passages 32 in a hot side of the recuperator 22. inside the recuperator 22, heat from the turbine exhaust gas on the hot side is transferred to the compressed air on the cold side. In this manner, some heat of combustion is recuperated and used to raise the temperature of the compressed air en route to the combustor 24. After surrendering part of its heat, the gas exits the recuperator 22. Additional heat recovery stages could be added onto the power generating system 10.

The generator 16 can be a ring-wound, two-pale toothless (TPTL) brushless permanent magnet machine having a permanent magnet rotor 34 and stator windings 36. The turbine power generated by the rotating turbine 14 is used to rotate the rotor 34. The rotor 34 is attached to the shaft 18. When the rotor 34 is rotated by the turbine power, an alternating current is induced in the stator windings 36. Speed of the turbine 34 can be varied in accordance with external energy demands placed on the system 10. Variations in the turbine speed will produce a variation in the frequency of the alternating current (i.e., wild frequencies) generated by the electrical generator 16. Regardless of the frequency of the ac power generated by the electrical generator 16, the ac power can be rectified to dc power by a rectifier 38, and then chopped by a solid-state electronic inverter to produce ac power having a fixed frequency. Accordingly, when less power is required, the turbine speed can be reduced without affecting the frequency of the so output.

When the rectifier 38 extracts electrical power from the generator 16, a load is placed on the generator 16. As the amount of extracted energy is increased, the load is increased. As the amount of extracted energy is decreased, the load is decreased.

Moreover, reducing the turbine speed reduces the airflow because the compressor runs slower. Consequently, the turbine inlet temperature remains essentially constant, thus maintaining a high efficiency at part load.

Use of the rectifier 38 and the inverter 40 allows for wide flexibility in determining the electric utility service to be provided by the power generating system of the present invention. Because any inverter 40 can be selected, frequency of the ac power can be selected by the consumer. If there is a direct use for an power at wild frequencies, the rectifier 38 and inverter 40 can be eliminated.

The power generating system 10 can also include a battery 46 for providing storage and backup power. The controller 42 causes the battery 46 to deliver a load when a load increase is demanded. The battery 46 can be sized to handle peak load demand on the system 10. When used in combination with the inverter 40, the combination can provide uninterruptible power for hours after generator failure.

During operation of the power generating system 10, heat is generated in the electrical generator 16 due to inefficiencies in generator design. In order to extend the life of the electrical generator 16, as well as to capture useful heat, compressor inlet air flows over the generator 16 and absorbs excess heat from the generator 16. The rectifier 38 and the inverter 40 can also be placed in the air stream. Alter the air has absorbed heat from the aforementioned sources, it is compressed in the compressor 12 and further preheated in the recuperator 22.

A controller 42 controls the turbine speed by controlling the amount of fuel flowing to the combustor. 24. The controller 42 uses sensor signals generated by a sensor group to determine the external demands upon the power generating system 10. The sensor group 44 could include sensors such as position. sensors, turbine speed sensors and various temperature and pressure sensors for measuring operating temperatures and pressures in the system 10. Using the aforementioned sensors, the controller 42 controls both startup and optimal performance during steady state operation. The controller 42 can also determine the state of direct current storage in the battery.46, and adjust operations to maintain conditions of net charge, net drain, and constant charge of the battery.

The controller 42 also uses the speed and temperature signals from the sensor group 44 to calculate the load demanded of the system 10, eased on the calculated load demand, the controller 42 determines whether the generator 16 should supply the load or the battery 46 should supply the load.

When supplying a constant demand for power, the controller 42 causes the generator 16 to supply all of the system load demand. When the load demand is increased, the controller 42 causes the battery 46 to satisfy the entire load demand, but only for a short time. While the battery 46 is supplying the entire load, the generator 16 is unloaded, thereby causing the rotor speed to increase to a new higher level. Once the higher rotor speed is attained, the controller 42 causes the generator 16 to supply the entire load.

Shifting the load to the battery 46 allows the turbine inlet 30 to be maintained at or near maximum temperature, which allows the system 10 to operate at maximum efficiency and to reduce the rate of emissions.

The controller 42 commands the fuel flow control valve 26 to maintain the turbine inlet temperature at or near maximum. Additionally, the controller 42 controls the turbine load independently of the electrical load demand on the system 10 by regulating the load on the generator 16. If turbine speed drops below a set point (the speed set point depending upon the value of the system load demand), the controller 42 commands the rectifier 38 and the inverter 40 to reduce the load on the generator 16. If the turbine speed increases above the speed set point, the controller 42 commands the rectifier 38 and inverter 40 to increase the load on the generator 16. When the load demand is increased, the battery 46 delivers the load, thereby unloading the generator 16 and allowing the rotor 38 to speed up.

A switch/starter control 48 can be provided off-skid to start the power generating system 10. Rotation of the shaft 18 can be started by using the generator 16 as a motor. During startup, the switch/starter control 48 supplies an excitation current to the stator windings 34 of the electrical generator 16. Startup power is supplied by the battery 46. In the alternative, a compressed air device could be used to motor the power generating system 10.

Referring to FIG. 2, the "engine core" 50 of the power generating system 10 is shown. The compressor 12 includes an impeller 52 having a bore, a compressor scroll 54 and a diffuser channel 56. Air entering an air inlet 58 is filtered by an air filter 59 and directed to the compressor scroll 54. Air flowing out of the compressor scroll 54 is directed to the recuperator 22.

The turbine 14 includes a turbine scroll 60, a plurality of fixed nozzle vanes 62, and a boreless turbine wheel 64. Hot expanding gases leaving the combustor 24 are directed into the turbine scroll 60 and through the nozzle vanes 62, which redirect the hot expanding gas onto the turbine wheel 64. Turbine exhaust gas leaves the turbine 14 through an exhaust diffuser 66, which reduces the temperature and noise of the turbine exhaust gas.

The rotor 34 of the electrical generator 16 includes magnets 68 made of a rare earth material such as samarium cobalt. The magnets 68 are surrounded by a containment sleeve 70 made of a non-magnetic material Inconel 718. The stator windings 36 are housed in a generator housing 73. The rotor 34 has a bore and an optional containment sleeve (not shown) contacting a surface of the bore. Power conductors 72 extend from the stator windings 36 and terminate in a power connector stud 74. which is secured to a base. The base provides support for a fuel inlet, the air inlet 53, the compressor 12. the turbine 14, the generator 16, the recuperator 22, the combustor 24, the rectifier 38. and the inverter 40, to enable the system 10 to exist as a packaged unit.

The single shaft 18 a shown in FIG. 2 as a tieshaft 75, which extends through the bores in the rotor 34 and the compressor impeller 52. The tieshaft 75 is thin, having a diameter of approximately 0.25 inches to 0.5 inches. 'The bores have clearances that allow the tieshaft 75 to extend through the rotor 34 and the impeller 52. However, the tieshaft 75 does not extend through the turbine wheel 64. Instead, the tieshaft 75 is secured to the turbine wheel 64. The tieshaft 75 can be secured to the centre of the turbine wheel hub by an inertia weld. Thus, the turbine wheel 64 is borders in that it does not have a bore through which the tieshaft 75 extends. Eliminating the bore reduces stresses in the turbine wheel 64.

When clamped together by the tieshaft 75, the compressor impeller 52, the turbine wheel 64 and the rotor 34 are rotated as a single unit. Under high operating temperatures and rotational speeds, however, the impeller 52, the turbine wheel 64 and the rotor 34 tend to expand and grow apart and their faces tend to lose contact. Flexing of the tieshaft 75 during operation also tends to separate the faces. To maintain contact between the faces of the impeller 52, the turbine wheel 64 and the rotor at high rotational speeds (80,000 rpm and above), the tieshaft 75 is preloaded. For example, a tieshaft 75 made of titanium can bee preloaded in tension to 90% of yield strength. During assembly, the tieshaft 75 is placed in tension, impeller 52 and the rotor 38 are slid over the tieshaft 75, and a nut 77 is secured to a threaded end of te tieshaft 75. Then tension is maintained as the nut is turned. The tension is highest at the centres of the impeller 52 and the rotor 38. When the impeller 52 and the rotor 38 are rotated, high stresses in the outer portion of these components is countered by the tieshaft 75.

The rotating unit 52, 64, 38 and 18 is supported in a radial direction by inboard and outboard foil journal bearings 76 and 78. The rotating unit 52, 64, 38 and 18 is supported in an axial direction by a foil thrust bearing 80. A base 79 provides support for a fuel inlet, the air inlet 58, the compressor 12, the turbine 14, the generator 16, the recuperator 22, the combustor 24, the rectifier 38, and the inverter 40, to enable the system 10 to exist as a packaged unit.

Various coolant ports are provided for the engine core 50. Provided are ports 82 and 84 for circulating a coolant over the stator windings 40. Also provided are ports 86 and 88 for circulating a coolant over the bearings 76, 78 and 80.

The power generating system 10 can be built in several major modules such as a rotating module, a heat exchanger module, a combustor module, and an electronics module. Each of these modules is relatively lightweight and compact. The modules can be replaced without breaking liquid lines. The use of foil bearings 52 and 54 eliminates the need for an oil-based lubrication system and, therefore, results in low maintenance of the power generating system 10. Scheduled maintenance would consist primarily of replacing the igniter 27, the filter 59 and catalyst elements in the combustor 24.

The power generating system 10 operates on a conventional recuperated Brayton cycle. The Brayton cycle can be operated on a relatively low pressure ratio (3.8) to maximize overall efficiency; since, in recuperated cycles, the lower the pressure ratio, the closer the turbine exhaust temperature is to the inlet temperature. This allows heat addition to the cycle at high temperature and, in accordance with the law of Carnot, reduces the entropic losses associated with supplying heat to the cycle. This high temperature heat addition results in an increased overall cycle efficiency. Air is compressed in a single stage radial compressor to 3.8 bars. The compressed air can be directed to the recuperator 22where the temperature of the compressed air is increased using the waste heat of the turbine exhaust gas. The temperature of the exhaust gas from the turbine is limited to about 1,300°F in order to help extend the life of the recuperator 22. For exhaust gas temperatures above 1,300°F, the recuperator 22 can be made of super alloys instead of stainless steel. The recuperator 22 can be designed for either 85% or 90% effectiveness depending on the economic needs of the customer. In the most efficient configuration, and using the 90% recuperation, the overall net cycle efficiency is 30%, yielding a high heating value heat rate of approximately 11,900 BTU/kWh on diesel.

After being heated in the recuperator 22, the compressed air is directed to the combustor 24, where additional heat is added to raise the temperature of the compressed air to 1,650 F. A combustor 24 designed according to a conventional design can yield a Nox level of less than 25 ppm, and a combustor 24 using a catalyst can yield a Nox rate that is virtually undetectable (commercial Nox sensors are limited to a 2 to 3 ppm detection range). The high enthalpic gas is then expanded through the turbine 14. The compressor 12, the turbine 14, the generator 16, and the single shaft 18 - the only moving part in the engine core 50 - spins at high speeds of approximately 80,000 rpm or more. The resulting high frequency of around 1,200 hertz is then reduced with the inverter 38 to a grid-compatible 50 or 60 cycles. Resulting is a high power density typified by low weight (about a third of the size of a comparable diesel generator) and a small footprint (for example, approximately 3 feet by 5 feet by 6 feet high).

The high power density and low weight of the technology is made possible through the high speed components which permits large amounts of power using a minimum of material. The unit is completely self-contained in a weather proof enclosure. The power generating system 10 is "plug and play" technology, requiring little more than a supply of clean fuel, liquid or gas.

Thus disclosed is a highly efficient power generating system 10. Even though the turbine 14 is inherently unstable turbine 14, it operates within a stable system 10. The turbine 14 can be operated at or near maximum inlet temperature, yet it will not stall if an increase in demand is met. Because the turbine is operated at maximum inlet temperature, thermodynamic efficiency of the system is maximized and emissions are reduced. When an increase in demand is satisfied by the energy storage device, the electrical output of the generator can be reduced by reducing turbine speed. Thus, turbine load is controlled independently of the system load demand.

The microturbine power generating system 10 can use multiple fuels including natural gas, diesel and JP-8. The power generating system 10 has a low thermal signature and minimal noise generation. The use of air bearings eliminates the need for an oil-based lubrication system. The electrical generation system 10 has high reliability and minimal service requirements due to single moving part design. The use of a solid-state electronic inverter allows the system 10 to provide a variable AC output. Installation is easy due to a modular and self contained design, and servicing is easy because the system 10 has one moving part and major parts that are easily accessible. The width, length and height of the engine core 50 can be adjusted to fit a wide variety of dimensional requirements.

The power generating system 10 is smaller, lighter, is more fuel-efficient and has lower thermal signature, noise, maintenance and cost penalties than comparable internal combustion engines. Therefore, due to its low initial first cost, low installation costs, high efficiency, high reliability and simple, low cost maintenance, the electrical power generating system 10 provides lower operating and fixed costs than power generation technologies of comparable size.

Potential applications for the power generating system 10 are many and diverse. Applications include use in off-grid applications for standalone power, on-grid applications for peak shaving, load following or base load service, emergency back-up and uninterruptible power supply, prime mover applications (e.g., pump, air conditioning) and automotive hybrid vehicles.

The invention is not limited to the specific embodiments disclosed above. For example, a flywheel can be used as a storage device instead of the battery 46. When peak power is demanded, the momentum of the flywheel allows additional power to be delivered and an additional load to be placed on the electrical generator 16, all without stalling the turbine 16. Accordingly, the present invention is construed according to the claims that follow.

## Claims

1. A microturbine power generation system (10) comprising:
a turbine (14) having a fixed inlet nozzle (30);
an energy storage device (46); and **characterised by**
a controller for maintaining the turbine inlet at or near maximum turbine inlet temperature, the controller causing the energy storage device (46) to temporarily supply a load when a load increase is demanded of the system (10) until the turbine power is brought to equal the demanded load.

2. The system (10) of claim 1, wherein the system further comprises an electric generator (16) driven by turbine power, wherein the energy storage device (4, 6) includes a battery (4, 6), wherein the controller causes electric power to be supplied by the electric generator until a demand for the power is increased, whereupon the controller temporarily causes electric power to be supplied by the battery.

3. The system (10) of claim 2, wherein the controller causes the battery (4, 6) to temporarily supply the entire demand for power when the demand for power is increased, whereby turbine speed is increased while the battery is suppling the load.

4. The system (10) of claim 1, further comprising a generator (16); and
an electronic power unit in communication with the controller to adjust the generator load to control turbine speed, the energy storage device (46) temporarily supplying load when the load demand is increased.

5. The system of claim 1, wherein ;
the controller monitors engine temperature and engine speed; and further comprising:
an electric generator (16) ;
means, responsive to the controller for regulating fuel flow to hold the engine temperature constant, even when system load demand changes; and
the controller further comprising means for determining whether to shift any of the load demand from the generator to the energy storage device (46) when the load demand changes.

6. The system (10) of claim 5 wherein engine speed is controlled by means for regulating a load on the generator (16) in order to maintain a speed set point.

7. The system (10) of claim 6, wherein the engine speed set point is determined by the load demand and achieved by controlling the generator load independent of the system load demand.

8. The system (10) of claim 5, wherein the controller has means for causing the load on the generator (16) to increase when turbine speed increases above the speed set point.

9. The system (10) of claim 5, wherein the controller has means for causing the regulating means to hold the engine temperature constant independent of turbine speed.

10. The system (10) of claim 5, wherein the energy storage device (46) is sized to satisfy a peak load demand on the system.

11. A method of controlling a microturbine power generating system (10) the system including an electrical generator (16), a turbine (14) having a fixed inlet nozzle geometry (30), and an external storage device (46), the method comprising:
maintaining the inlet nozzle at a constant temperature;
using the electrical generator to satisfy power demanded of the system until the power demanded is increased; and **characterised by**
using the external storage device to temporarily satisfy the power demanded when the power demanded is increased until the turbine power is brought to equal the demanded load;
the nozzle inlet temperature being at the constant temperature while the power demand is being satisfied by the external storage device.

12. The method of claim 11, wherein the external storage device (46) is used to temporarily satisfy the entire power demand when the power demanded of the system (10) is increased.

## Patentansprüche

1. Mikroturbinen-Energieerzeugungssystem (10), enthaltend:
eine Turbine (14) mit einer festen Einlaßdüse (30),
eine Energiespeichervorrichtung (46) und **gekennzeichnet durch**
eine Regelung, um die Turbineneinlasstemperatur an oder nahe der maximalen Turbineneinlasstemperatur zu halten, wobei die Regelung die Energiespeichervorrichtung (46) veranlasst, eine Last zeitweise zu speisen, wenn eine Lasterhöhung von dem System (10) gefordert ist, bis die Turbinenleistung auf die geforderte Last gebracht ist.

2. System (10) nach Anspruch 1, wobei das System ferner einen elektrischen Generator (16) enthält, der durch Turbinenleistung angetrieben ist, und die Energiespeichervorrichtung (4, 6) eine Batterie (4, 6) aufweist, wobei die Regelung bewirkt, daß elektrische Energie durch den Generator geliefert wird, bis ein Energiebedarf erhöht wird, woraufhin die Regelung zeitweise bewirkt, daß elektrische Energie durch die Batterie geliefert wird.

3. System (10) nach Anspruch 2, wobei die Regelung bewirkt, daß die Batterie (4, 6) zeitweise den gesamten Leistungsbedarf liefert, wenn der Leistungsbedarf erhöht wird, wodurch die Turbinendrehzahl erhöht wird, während die Batterie die Last versorgt.

4. System (10) nach Anspruch 1, wobei ferner ein Generator (16) vorgesehen ist und
eine elektronische Leistungseinheit mit der Regelung in Verbindung ist, um die Generatorlast zum Regeln der Turbinendrehzahl einzustellen, wobei die Energiespeichervorrichtung (46) die Last zeitweise speist, wenn der Lastbedarf erhöht wird.

5. System (10) nach Anspruch 1, wobei
die Regelung die Triebwerkstemperatur und Triebwerksdrehzahl überwacht und ferner enthält:
einen elektrischen Generator (16),
eine Einrichtung, die auf die Regelung anspricht zum Regulieren der Brennstoffströmung, um die Triebwerkstemperatur konstant zu halten, selbst wenn sich der Lastbedarf des Systems ändert, und
wobei die Regelung ferner eine Einrichtung enthält, um zu ermitteln, ob ein Lastbedarf von dem Generator zu der Energiespeichervorrichtung verschoben werden soll, wenn sich der Lastbedarf ändert.

6. System (10) nach Anspruch 5, wobei die Triebwerksdrehzahl geregelt wird durch Regulieren einer Last an dem Generator (16), um einen Drehzahl-Sollwert beizubehalten.

7. System (10) nach Anspruch 6, wobei der Sollwert der Triebwerksdrehzahl durch den Lastbedarf ermittelt und durch Regeln der Generatorlast unabhängig von dem Lastbedarf des Systems erreicht wird.

8. System (10) nach Anspruch 5, wobei die Regelung eine Einrichtung hat, damit die Last an dem Generator (16) ansteigt, wenn die Turbinendrehzahl über den Drehzahl-Sollwert ansteigt.

9. System (10) nach Anspruch 5, wobei die Regelung eine Einrichtung hat, damit die Reguliereinrichtung die Triebwerkstemperatur unabhängig von der Turbinendrehzahl konstant hält.

10. System (10) nach Anspruch 5, wobei die Energiespeichervorrichtung (46) in der Größe bemessen ist, um den Spitzenlastbedarf an dem System zu erfüllen.

11. Verfahren zum Regeln eines Mikroturbinen-Energieerzeugungssystems (10), wobei das System einen elektrischen Generator (16), eine Turbine (14) mit einer festen Einlassdüsengeometrie (30) und eine externe Speichervorrichtung (46) aufweist, wobei das Verfahren enthält:
Halten der Einlaßdüse auf einer konstanten Temperatur,
Verwenden des elektrischen Generators, um die von dem System geforderte Leistung zu erfüllen, bis die geforderte Leitung erhöht wird, und **gekennzeichnet durch**:
Verwenden der externen Speichervorrichtung, um die geforderte zeitweise zu erfüllen, wenn die geforderte Leistung erhöht wird, bis die Turbinenleistung auf die geforderte Leistung gebracht ist,
wobei die Düseneinlaßtemperatur auf der konstanten Temperatur ist, während der Leistungsbedarf **durch** die externe Speichervorrichtung erfüllt wird.

12. Verfahren nach Anspruch 11, wobei die externe Speichervorrichtung (46) verwendet wird, um den gesamten Leistungsbedarf zeitweise zu erfüllen, wenn der Leistungsbedarf des Systems (10) erhöht wird.

## Revendications

1. Système de production d'énergie à microturbine (10) comprenant :
une turbine (14) comportant une tuyère d'admission fixe (30) ;
un dispositif de stockage d'énergie (46) ; et **caractérisé par**
un contrôleur pour maintenir l'entrée de la turbine à ou près de la température d'entrée de turbine maximale, le contrôleur obligeant le dispositif de stockage d'énergie (46) à fournir temporairement une charge quand une augmentation de charge est demandée au système (10) jusqu'à ce que la puissance de la turbine soit mise au niveau de la charge demandée.

2. Système (10) selon la revendication 1, dans lequel le système comprend en outre un générateur électrique (16) entraîné par la puissance de la turbine, dans lequel le dispositif de stockage d'énergie (4, 6) comprend une batterie (4, 6), dans lequel le contrôleur fait fournir de l'énergie électrique par le générateur électrique jusqu'à ce qu'une demande de puissance soit augmentée, après quoi le contrôleur fait temporairement fournir de l'énergie électrique par la batterie.

3. Système (10) selon la revendication 2, dans lequel le contrôleur oblige la batterie (4, 6) à fournir temporairement toute la demande de puissance quand la demande de puissance est augmentée, grâce à quoi la vitesse de la turbine est augmentée pendant que la batterie fournit la charge.

4. Système (10) selon la revendication 1, comprenant en outre un générateur (16) ; et
un module de puissance électronique en communication avec le contrôleur pour régler la charge du générateur pour commander la vitesse de la turbine, le dispositif de stockage d'énergie (46) fournissant temporairement la charge quand la demande de charge augmente.

5. Système selon la revendication 1, dans lequel
le contrôleur surveille la température du moteur et la vitesse du moteur ; et comprenant en outre :
un générateur électrique (16) ;
un moyen répondant au contrôleur pour réguler l'écoulement de carburant afin de maintenir constante la température du moteur, même quand la demande de charge du système change ; et
le contrôleur comprenant en outre un moyen pour déterminer s'il y a lieu de faire passer l'une quelconque des demandes de charge du générateur au dispositif de stockage d'énergie (46) quand la demande de charge change.

6. Système (10) selon la revendication 5, dans lequel la vitesse du moteur est commandée par un moyen servant à réguler une charge sur le générateur (16) afin de maintenir un point établi de vitesse.

7. Système (10) selon la revendication 6, dans lequel le point établi de vitesse du moteur est déterminé par la demande de charge et obtenu en commandant la charge du générateur indépendamment de la demande de charge du système.

8. Système (10) selon la revendication 5, dans lequel le contrôleur comporte un moyen pour faire augmenter la charge du générateur (16) quand la vitesse de la turbine augmente au-dessus du point établi de vitesse.

9. Système (10) selon la revendication 5, dans lequel le contrôleur comporte un moyen pour obliger le moyen de régulation à maintenir constante la température du moteur indépendamment de la vitesse de la turbine.

10. Système (10) selon la revendication 5, dans lequel le dispositif de stockage d'énergie (46) est dimensionné de manière à satisfaire une demande de charge crête du système.

11. Procédé de commande d'un système de production d'énergie à microturbine (10), le système comprenant un générateur électrique (16), une turbine (14) ayant une géométrie de tuyère d'admission fixe (30), et un dispositif de stockage externe (46), le procédé comprenant les étapes consistant à :
maintenir l'entrée de la turbine à une température constante ;
utiliser le générateur électrique pour satisfaire la puissance demandée au système jusqu'à ce que la puissance demandée augmente ; et **caractérisé par** les opérations consistant à
utiliser le dispositif de stockage externe pour satisfaire temporairement la puissance demandée quand la puissance demandée augmente jusqu'à ce que la puissance de la turbine soit mise au niveau de la charge demandée ;
la température d'entrée de tuyère étant à la température constante pendant que la demande de puissance est satisfaite par le dispositif de stockage externe.

12. Procédé selon la revendication 11, dans lequel le dispositif de stockage externe (46) est utilisé pour satisfaire temporairement toute la demande de puissance quand la puissance demandée du système (10) augmente.
